Europäisches Patentamt

European Patent Office

Office européen des brevets

(11) Numéro de publication: **0 326 057 B1**

## (12) FASCICULE DE BREVET EUROPEEN

(45) Date de publication de fascicule du brevet: **23.12.92**   (51) Int. Cl.⁵: **G21C 9/02**, G21C 17/10

(21) Numéro de dépôt: **89101100.9**

(22) Date de dépôt: **23.01.89**

(54) **Système de protection d'un réacteur nucléaire en cas de chute d'un élément antiréactif.**

(30) Priorité: **27.01.88 FR 8800926**

(43) Date de publication de la demande:
**02.08.89 Bulletin 89/31**

(45) Mention de la délivrance du brevet:
**23.12.92 Bulletin 92/52**

(84) Etats contractants désignés:
**BE CH DE ES GB LI SE**

(56) Documents cités:
**EP-A- 0 127 532**
**EP-A- 0 200 999**
**US-A- 4 548 784**

**IEEE TRANSACTIONS ON NUCLEAR SCIENCE, vol. 20, no. 1, février 1973, pages 609-617; V.H. ALLEN: "Power reactor flux-tilt protection instrument"**

**REVUE GENERALE NUCLEAIRE RGN, no. 5, septembre 1983, pages 363-368; H. BOUCHEZ et al.: "Un circuit essentiel de protection des réacteurs nuléaires: l'arrêt d'urgence par chute de barres absorbantes"**

(73) Titulaire: **FRAMATOME**
**Tour Fiat 1, Place de la Coupole**
**F-92400 Courbevoie(FR)**

(72) Inventeur: **Bourin, Jean-Michel**
**95 Rue Lauriston**
**F-75116 Paris(FR)**
Inventeur: **Mourlevat, Jean-Lucien**
**16 Rue Rémi Belleau**
**F-78590 Noisy Le Roi(FR)**
Inventeur: **Sengler, Gilbert**
**14 Hameau du Bois**
**F-78990 Elancourt(FR)**

(74) Mandataire: **Weinmiller, Jürgen et al**
**Lennéstrasse 9 Postfach 24**
**W-8133 Feldafing(DE)**

## Description

La présente invention concerne les réacteurs nucléaires.

De manière générale elle s'applique dans les circonstances suivantes :

Un réacteur présente un axe vertical. La réaction nucléaire qui a lieu dans le coeur de ce réacteur s'accompagne d'un flux neutronique qui est distribué autour de cet axe (et verticalement). Ce coeur présente des évidements verticaux distribués autour de cet axe et il est muni d'éléments antiréactifs commandables (barres de contrôle) qui peuvent descendre dans ces évidements pour absorber ledit flux neutronique et ainsi commander ladite réaction nucléaire. Il en résulte que la chute accidentelle d'un dit élément antiréactif dans un dit évidement absorbe localement ledit flux neutonique et perturbe sa distribution autour dudit axe. Une continuation non limitée de ladite réaction nucléaire peut alors endommager ledit coeur. C'est notamment pourquoi on prévoit un système de protection. Un tel système comporte classiquement des chaines de protection séparées en nombre supérieur à deux pour des raisons de sécurité. Chacune de ces chaînes est agencée pour fournir un signal de chute en sortie de chaîne en représentation de la chute d'un dit élément antiréactif et comporte pour cela :

- un détecteur de flux neutronique disposé à distance dudit axe pour mesurer un flux neutronique local qui subit, en cas d'une dite chute d'un élément antiréactif, une diminution d'autant plus grande que ledit évidement où a lieu cette chute est plus proche de ce détecteur,
- et un circuit de traitement primaire associé à ce détecteur pour fournir un signal primaire de chute seulement lorsque le flux neutronique mesuré par ce détecteur subit une diminution qui présente une vitesse de décroissance dépassant un seuil de vitesse prédéterminé.

Une telle chaîne présente d'une part le risque de fournir de manière erronée un signal de chute en sortie de chaîne en l'absence de chute d'un dit élément antiréactif, d'autre part le risque d'avoir une défaillance empêchant la fourniture dudit signal primaire de chute en présence de la chute d'un dit élément antiréactif.

Lesdits détecteurs sont distribués angulairement autour dudit axe.

Ledit système comporte en outre un circuit de traitement secondaire recevant des signaux de chute en sortie des dites chaines de protection et fournissant un signal secondaire de chute seulement lorsqu'il reçoit au moins deux dits signaux de chute en sortie de deux de ces chaînes, respectivement, de manière à diminuer le risque qu'un tel signal secondaire de chute soit fourni en l'absence de chute d'un dit élément antiréactif,

- et des moyens pour limiter la dite réaction nucléaire lorsque ledit signal secondaire de chute est fourni.

De manière plus spécifique, on envisage la chute d'une ou plusieurs grappes de barres de contrôle, c'est-à-dire d'éléments antiréactifs, dans le coeur d'un réacteur nucléaire du type dit PWR, c'est-à- dire à eau préssurisée. Une telle chute a pour conséquence principale de perturber la distribution du flux neutronique dans le coeur. Cette perturbation peut être très importante et risque de provoquer la crise d'ébullition de l'eau, donc l'endommagement des crayons combustibles, si aucune action de protection n'est entreprise. Une telle action de protection consiste notamment en une mise en oeuvre desdits moyens pour limiter la réaction nucléaire.

Vis à vis de ce risque et d'autres risques, les organes électriques de sauvegarde et de sécurité d'un réacteur nucléaire sont répartis en quatre groupes distincts appelés chaînes de protection. Chacun de ces groupes est indépendant des autres groupes. Ils sont alimentés par des sources distinctes et sont implantés dans des locaux séparés. Les câbles de liaison entre les différents composants d'un même groupe cheminent par des parcours différents et séparés des parcours utilisés pour les autres groupes.

La puissance du réacteur est mesurée par des détecteurs de flux neutronique à temps de réponse court installés à l'extérieur du réacteur et cette mesure est utilisée par les organes de sécurité. Pour des raisons d'encombrement et de positionnement il y a un détecteur par point de mesure et non pas quatre sondes comme pour d'autres mesures. Chacun de ces détecteurs est affecté à une chaîne de protection.

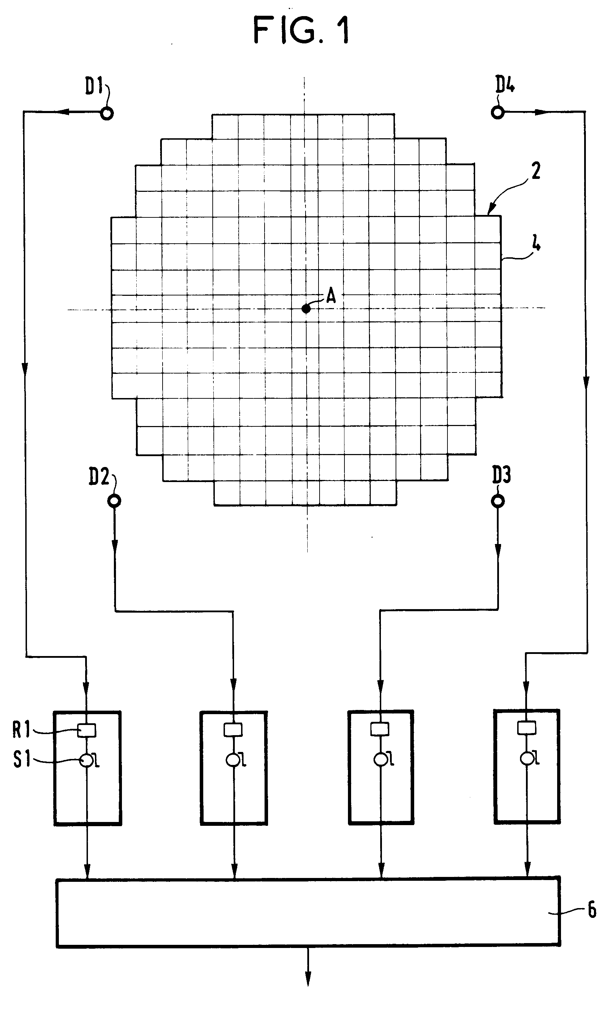

De manière connue le coeur du réacteur présente la forme d'un réseau à maille carrée inscrit dans un carré circonscrit. Par rapport à ce carré circonscrit, les quatre détecteurs de flux neutronique sont placés sur des axes diagonaux (voir figure 1). Il doit cependant être compris que le système selon l'invention peut s'appliquer tout aussi bien à un réacteur à réseau hexagonal.

L'action de protection du réacteur est provoquée lorsque deux des quatre chaînes (logique 2/4) constatent une vitesse de décroissance rapide qui dépasse par valeur négative un seuil de vitesse égal typiquement à 2 à 3 % du flux nominal par seconde. Cette vitesse est la dérivée du flux mesuré, par rapport au temps, cette dérivée étant filtrée en fréquences.

Ce dépassement de seuil intervient dans les tout premiers instants de l'incident, lorsque la puissance nucléaire baisse transitoirement pendant la chute de la grappe, avant que les systèmes de régulation et les contre-réactions aient un effet sensible. On sais que ces systèmes et contre réactions tendent à rétablir l'équilibre entre la puissance nucléaire et la puissance demandée par la turbine à vapeur classiquement alimentée à partir du réacteur nucléaire.

La protection du coeur doit être assurée même si l'une des quatre chaîne de protection est défaillante (critère de défaillance unique). Or la présence normale dans le coeur d'une ou plusieurs grappes absorbantes utilisées pour limiter la puissance nucléaire crée une perturbation radiale, acceptable en elle-même, du flux neutronique. Mais il a été trouvé que, dans le cas d'une chute accidentelle d'une ou plusieurs autres grappes, une telle perturbation pouvait affaiblir fortement le signal de détection de chute issu d'un voire deux détecteurs éloignés de la grappe ou des grappes qui sont tombées accidentellement. Seuls les deux détecteurs les plus proches peuvent donner alors un signal significatif. Or l'un de ces détecteurs peut être défaillant. C'est pourquoi, et dans le cadre du critère de défaillance unique cité plus haut, on doit considérer que des actions de protection rendues nécessaires par certaines chutes de grappes ne seront en fait pas entreprises, parce que ces chutes ne seront pas détectées par le système de protection. De tels cas de chute potentiellement non détectée de manière sûre doivent être pris en compte dans le dimensionnement de la chaudière et conduisent à en limiter les performances.

La présente invention a notamment pour but d'améliorer les performances d'une chaudière nucléaire en diminuant les contraintes imposées au constructeur par le risque de non détection d'une chute de grappe par le système de protection.

Elle a pour objet un système qui comporte de manière connue
- les dites chaines de protection,
- ledit circuit de traitement secondaire,
- et lesdits moyens pour limiter la dite réaction nucléaire.

Par rapport au système connu précédemment décrit, le système selon l'invention est caractérisé par le fait que chaque dite chaîne de protection comporte au moins deux dits détecteurs de flux neutronique décalés angulairement de plus de 90 degrés autour dudit axe,
- deux dits circuits de traitement primaires associés respectivement à ces deux détecteurs pour fournir desdits signaux primaires de chute,
- et un circuit de traitement intermédiaire pour recevoir ces signaux primaires de chute et fournir un signal intermédiaire de chute lorsqu'il reçoit au moins un signal primaire de chute d'au moins un des deux dits circuits de traitement primaire,
- lesdits signaux de chute en sortie desdites chaînes de protection étant constitués par ledits signaux intermédiaires de chute, de manière que ledit signal secondaire de chute soit fourni dans le cas d'une dite chute d'élément antiréactif même si la diminution consécutive du flux neutronique reçu par plusieurs desdits détecteurs relativement éloignés dudit évidement recevant cet élément antiréactif ne dépasse pas ledit seuil de vitesse de variation prédéterminé et même si en outre une défaillance de l'une desdites chaînes empêche la fourniture d'un dit signal primaire de chute à partir d'un dit détecteur relativement proche de cet évidement.

De préférence, dans le cas où le dit coeur du réacteur présente en plan les symétries d'un carré, le nombre desdites chaînes de protection étant quatre, lesdits détecteurs se succédent angulairement autour dudit axe avec un pas angulaire de 45 degrés.

Chaque dite chaîne de protection comporte deux dits détecteurs décalés angulairement de 135 degrés ou de 180 degrés autour dudit axe.

A l'aide des figures schématiques ci-jointes on va décrire plus particulièrement ci-après à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence.

Il doit être compris que les éléments mentionnés peuvent être remplacés par d'autres éléments assurant les mêms fonctions techniques.

La figure 1 représente une vue du système connu précédemment mentionné.

La figure 2 représenté une vue d'un premier système selon un premier mode de réalisation de l'invention.

La figure 3 représente une vue d'un deuxième système selon un deuxième mode de réalisation de l'invention.

Conformément à la figure 1, un réacteur nucléaire à eau pressurisée connu comporte un coeur 2 ayant un axe vertical A. Ce coeur présente en plan la forme d'un réseau carré dont les bords constituent partiellement le carré circonscrit précédemment mentionné. Les coins de ce carré sont coupés car ils ne font pas partie du coeur. C'est pourquoi ils ne sont pas représentés. Seule une partie médiane telle que 4 de chacun des côtés de ce carré est représentée car elle constitue une partie du bord du coeur.

Ce coeur présente deux axes médians parallèles à deux de ses côtés et deux axes diagonaux parallèles à ses diagonales. Quatre détecteurs de

flux neutroniques $D_1$, $D_2$, $D_3$, $D_4$ sont disposés à l'extérieur et à proximité de ce coeur sur les axe diagonaux. C'est-à-dire que, autour de l'axe vertical A et à partir d'un origine angulaire orientée vers le haut de la figure, ils sont placés dans des positions angulaires à 45, 135, 225 et 315 degrés. Quatre chaines de protection identiques comportent chacune l'un de ces détecteurs, par exemple le détecteur $D_1$, et un circuit de traitement primaire fonctionnant comme un dérivateur $R_1$ suivi d'un organe de seuil $S_1$. Ce circuit fournit le signal primaire de chute précédemment mentionné, ceci dans le cas où une chute accidentelle d'une grappe de barres de contrôle a lieu au voisinage de ce détecteur ou même, si la distribution antérieurement établie du flux neutronique le permet, à distance de ce détecteur.

Un circuit de traitement secondaire 6 reçoit des signaux de chute fournis en sortie de ces quatre chaînes de protection. Ces signaux sont lesdits signaux primaires de chute. Ce circuit secondaire fournit le signal secondaire de chute précédemment mentionné si il reçoit deux signaux de chute en sortie desdites chaines.

Ce signal secondaire de chute commande une action de protection du réacteur par des moyens non représentés qui provoquent la chute quasi immédiate de l'ensemble des barres de contrôle.

A partir de ce système connu une caractéristique de l'invention réside dans l'utilisation de quatre détecteurs supplémentaires et dans leur couplage avec les quatre détecteurs habituels à l'intérieur des chaines de protection.

Ces détecteurs supplémentaires ne sont pas nécessairement identiques aux quatre détecteurs habituels. Ils sont situés sur des axes médians, à l'extérieur du coeur.

Il est préférable que la répartition des détecteurs soit faite de manière homogène sans que le pas angulaire soit obligatoirement de 45°.

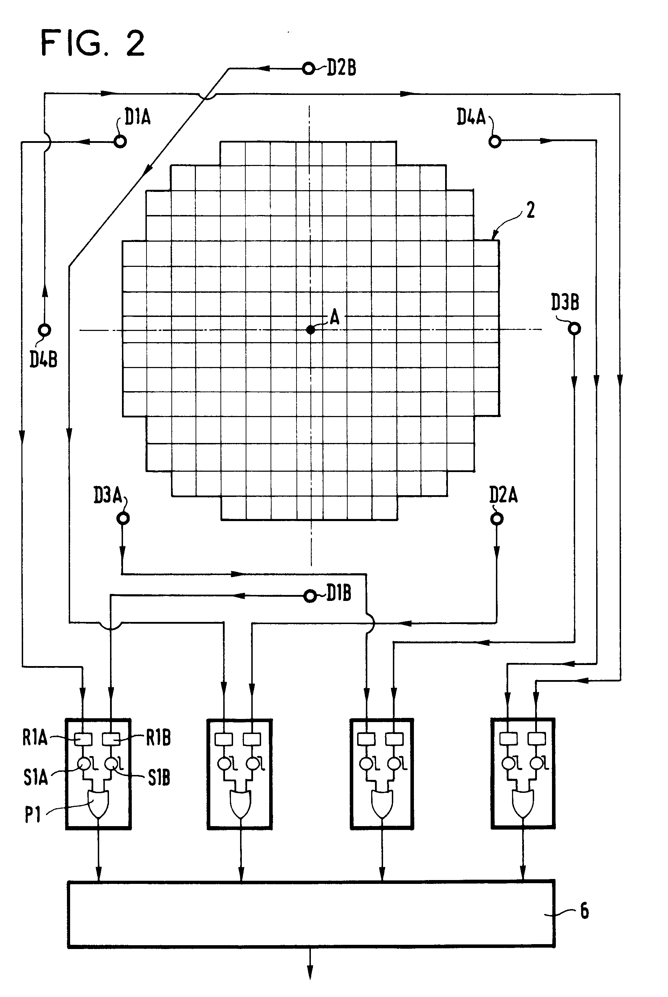

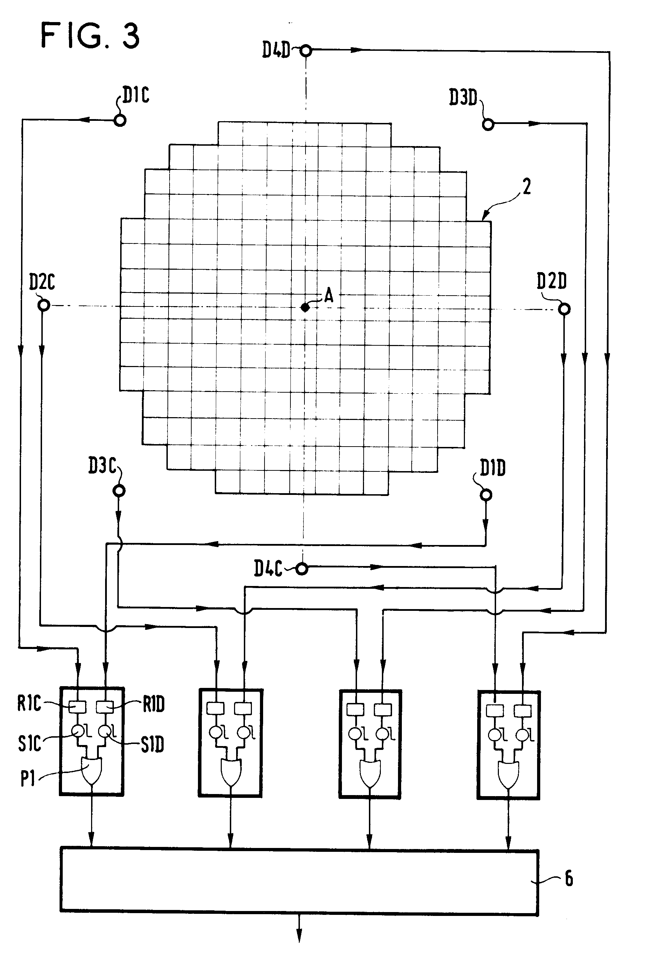

Les deux système représentés aux figures 2 et 3 assurent qu'en cas de chute accidentelle de grappe un minimum de trois détecteurs appartenant à trois chaînes de protection différentes seront à proximité de la, ou des grappes, donc donneront un signal de chute important . Le système assure alors la protection en logique 2/4 même en cas de défaillance d'une chaîne.

La différence entre ces deux systèmes est la suivante :

Le premier système représenté à la figure 2 présente l'avantage de la symétrie des chaînes : chaque chaîne comporte un détecteur diagonal et un détecteur médian.

Le deuxième système représenté à la figure 3 est quant à lui optimal vis-à-vis de la probabilité de détection d'une chute accidentelle :

. quatre détecteurs voisins appartiennent toujours à quatre chaînes différentes.

En revanche, les chaînes sont dissymétriques en ce qui concerne les détecteurs :

. deux chaînes ne comportent que des détecteurs en position diagonales, les deux autres chaînes utilisant les détecteurs en position médiane.

Selon les caractéristiques des détecteurs, qui peuvent dépendre de la position médiane ou diagonale, on choisira l'une ou l'autre des solutions, en tenant compte du fait que typiquement les circuits de traitement utilisés selon l'invention sont incorporés dans des unités de traitement qui assurent des fonctions de protection autres que celle qui a été décrite ci-dessus.

Plus spécifiquement et conformément à la figure 2, le premier système selon l'invention comporte huit détecteurs : D1A, D4B, D3A, D1B, D2A, D4A et D2B dans les positions angulaires à 45, 90, 135, 180, 225, 270, 315 et 360 degrés respectivement, une même chaîne, par exemple la première, comportant deux détecteurs D1A et D1B dont les références comportent le même chiffre. Chaque chaîne comporte en outre deux circuits de traitement primaires R1A, S1A et R1B, S1B associés à ces deux détecteurs, respectivement, et un circuit de traitement intermédiaire P1 constitué par une porte OU. Dans le deuxième système selon l'invention représenté à la figure 3 les détecteurs se succèdent aux mêmes positions que dans le premier mais dans l'ordre suivant D1C, D2C, D3C, D4C, D1D, D2D, D3D, et D4D, le chiffre désignant ici encore le numéro de la chaîne à laquelle ils appartiennent.

La première chaîne, par exemple, comporte des circuits de traitement primaires R1C, S1C et R1D, S1D associés aux détecteurs D1C et D1D, respectivement, et le circuit de traitement intermédiaire P1. Ce deuxième système est par ailleurs identique au premier.

## Revendications

1. Système de protection d'un réacteur nucléaire en cas de chute d'un élément antiréactif, ce système comportant :
   - des chaînes de protection séparées en nombre supérieur à deux pour protéger un réacteur dont un coeur est le lieu d'une réaction nucléaire et présente un axe vertical, cette réaction s'accompagnant d'un flux neutronique distribué angulairement autour de cet axe, ce coeur présentant des évidements verticaux distribués angulairement autour de cet axe et étant muni d'éléments antiréactifs commandables qui peuvent descendre dans ces évidements pour absorber ledit flux neutronique et ainsi commander ladite réaction nucléaire, de sorte que la chute accidentelle d'un dit élément antiréactif dans un dit évidement absorbe localement ledit flux neutronique et perturbe sa distribution autour dudit axe et qu'une continuation non limitée de ladite réaction nucléaire pourraît alors endommager ledit coeur, chacune desdites chaînes de protection étant agencée pour fournir un signal de chute en sortie de chaîne en représentation de la chute d'un dit élément antiréactif et comportant pour cela :

- un détecteur de flux neutronique (D1) disposé à distance dudit axe (A) pour mesurer un flux neutronique qui subit, en cas d'une dite chute d'un élément antiréactif, une diminution d'autant plus grande que ledit évidement où a lieu cette chute est plus proche de ce détecteur,
- et un circuit de traitement primaire (R1, S1) associé à ce détecteur (D1) pour fournir un signal primaire de chute seulement lorsque le flux neutronique mesuré par ce détecteur subit une diminution qui présente une vitesse de décroissance dépassant un seuil de vitesse prédéterminé,
- cette chaîne présentant d'une part le risque de fournir de manière erronée un signal de chute en sortie de chaîne en l'absence de chute d'un dit élément antiréactif, d'autre part le risque d'avoir une défaillance empêchant la fourniture dudit signal primaire de chute en présence de la chute d'un dit élément antiréactif,
- lesdits détecteurs étant distribués angulairement autour dudit axe,
- ledit système comportant en outre un circuit de traitement secondaire (6) recevant desdits signaux de chute en sortie des dites chaines de protection et fournissant un signal secondaire de chute seulement lorsqu'il reçoit au moins deux dits signaux de chute en sortie de deux de ces chaînes, respectivement, de manière à diminuer le risque qu'un tel signal secondaire de chute soit fourni en l'absence de chute d'un dit élément antiréactif,
- et des moyens pour limiter la dite réaction nucléaire lorsque ledit signal secondaire de chute est fourni,
- ce système étant caractérisé par le fait que chaque dite chaîne de protection comporte au moins deux dits détecteurs de flux neutronique (D1A, D1B) décalés angulairement de plus de 90 degrés autour dudit axe (A),
- deux dits circuits de traitement primaire (R1A, S1A et R1B, S1B) associés respectivement à ces deux détecteurs pour fournir desdits signaux primaires de chute,
- et un circuit de traitement intermédiaire (P1) pour recevoir ces signaux primaires de chute et fournir un signal intermédiaire de chute lorsqu'il reçoit au moins un signal primaire de chute d'au moins un des deux dits circuits de traitement primaire,
- lesdits signaux de chute fournis en sortie desdites chaînes de protection étant constitués par lesdits signaux intermédiaires de chute, de manière que ledit signal secondaire de chute soit fourni dans le cas d'une dite chute d'élément antiréactif même si la diminution consécutive du flux neutronique reçu par plusieurs desdits détecteurs relativement éloignés dudit évidement recevant cet élément antiréactif ne dépasse pas ledit seuil de vitesse de variation prédéterminé et même si en outre une dite défaillance de l'une desdites chaînes empêche la fourniture d'un dit signal primaire de chute à partir d'un dit détecteur relativement proche de cet évidement.

2. Système selon la revendication 1, ce système étant applicable à un réacteur dont le coeur (2) présente autour dudit axe (A) les mêmes symétries qu'un carré autour de son centre,
- le nombre desdites chaînes de protection (D1A, R1A, S1A, D1B, R1B, S1B, P1) étant quatre,
- et lesdits détecteurs (D1A, D4B, D3A, D1B, D2A, D3B, D4A, D2B) se succédant angulairement autour dudit axe avec un pas angulaire proche de 45 degrés.

3. Système selon la revendication 2 caractérisé par le fait que chaque dite chaîne de protection (D1A, R1A, S1A, D1B, R1B, S1B, P1) comporte deux dits détecteurs (D1A, D1B) décalés angulairement de 135 degrés autour dudit axe (A).

4. Système selon la revendication 2, caractérisé par le fait que chaque dite chaîne de protection (D1C, R1C, S1C, D1D, R1D, S1D, P1) comporte deux dits détecteurs (D1C, D1D) décalés angulairement de 180 degrés autour dudit axe (A).

**Claims**

**1.** A system for protecting a nuclear reactor in the event of a falling reaction-reducing element, said system comprising:

- more than two separated protection chains for protecting a reactor having a vertical axis core which is the site of a nuclear reaction, said reaction being accompanied by a neutron flux which is angularly distributed around said axis, said core having vertical hollows angularly distributed around said axis and provided with controllable reaction-reducing elements capable of descending in said hollows in order to absorb said neutron flux, thereby controlling said nuclear reaction, such that the accidental fall of one of said reaction-reducing elements into one of said hollows locally absorbs said neutron flux and disturbs the neutron flux distribution around said axis, and such that unlimited continuation of said nuclear reaction may then damage said core, each of said protection chains being designed to supply a fall signal at the chain outlet representing the fall of a reaction-reducing element and comprising to this end:

- a neutron flux detector (D1) disposed at a distance from said axis (A) for measuring a neutron flux which, in the event of one of said reaction-reducing elements falling, is subjected to a reduction, with the reduction being larger the nearer said detector is to said hollow in which said fall has taken place; and

- a primary processing circuit (R1, S1) associated with said detector (D1) for providing a primary fall signal solely when the neutron flux measured by said detector is subjected to a reduction whose rate of decrease exceeds a predetermined speed threshold;

- said chain presenting on the one hand the risk of erroneously supplying a fall signal at the outlet of the chain in the absence of a fall of such a reaction-reducing element, on the other hand the risk of having a malfunction preventing the supply of said primary fall signal when there is a fall of such said reaction reducing element;

- said detectors being angularly distributed around said axis;

- said system further including a secondary processing circuit (6) receiving said fall signals at the output of said protection chains and providing a secondary fall signal solely on receiving not less than two of said fall signals at the output of two respective chains, thereby reducing the risk of such a secondary fall signal being provided when none of said reaction-reducing elements has fallen; and

- means for limiting said nuclear reaction in the event that said secondary fall signal is provided;

- said system being characterized in that each of said protection chains includes at least two of said neutron flux detectors (D1A, D1B) angularly separated by more than 90° about said axis (A);

- two of said primary processing circuits (R1A, S1A and R1B, S1B) associated respectively with said two detectors for providing said primary fall signals; and

- an intermediate processing circuit (P1) for receiving said primary fall signals and for providing an intermediate fall signal on receiving at least one primary fall signal from at least one of said two primary processing circuits;

- said fall signals provided at the outputs from said protection chains being constituted by said intermediate fall signals, such that said secondary fall signal is provided in the event of one said reaction-reducing elements falling even if the resulting reduction in neutron flux received by a plurality of said detectors which are relatively far away from said hollow receiving said reaction-reducing element does not exceed said predetermined variation speed threshold, and even if one of said chains is faulty so that it prevents one of said primary fall signals from a detector relatively close to said hollow from being supplied.

**2.** A system according to claim 1, said system being applicable to a reactor whose core (2) has the same symmetries about said axis (A) as a square about its center;

- the number of said protection chains (D1A, R1A, S1A, D1B, R1B, S1B, P1) being four; and

- said detectors (D1A, D4B, D3A, D1B, D2A, D3B, D4A, D2B) being angularly distributed around said axis at an angular pitch close to 45°.

**3.** A system according to claim 2, characterized in that each of said protection chains (D1A, R1A, S1A, D1B, R1B, S1B, P1) includes two of said detectors (D1A, D1B) which are separated by an angle of 135° about said axis (A).

4. A system according to claim 2, characterized in that each of said protection chains (D1A, R1A, S1A, D1B, R1B, S1B, P1) includes two of said detectors (D1C, D1D) which are separated by an angle of 180° about said axis (A).

## Patentansprüche

1. Kernreaktorschutzsystem für den Fall eines eingefallenen reaktivitätsvermindernden Elements, mit:
   - mehr als zwei voneinander getrennten Sicherheitskreisen zum Schutz des Reaktors, in dessen Kern eine Kernreaktion stattfindet und der eine vertikale Achse aufweist, wobei diese Reaktion von einem Neutronenfluß begleitet wird, der winkelmäßig um diese Achse verteilt auftritt, wobei der Kern winkelmäßig um die Achse verteilte senkrechte Aussparungen aufweist und mit reaktivitätshemmenden Elementen versehen ist, die steuerbar sind und in die Aussparungen abgelassen werden können, um den Neutronenfluß zu absorbieren, um so die Kernreaktion zu steuern derart, daß ein versehentliches Herunterfallen eines dieser reaktivitätshemmenden Elemente in eine der Aussparungen örtlich den Neutronenfluß absorbiert und dessen Verteilung um die Achse herum stört, wobei eine unbegrenzte Fortführung der Kernreaktion den Kern beschädigen könnte, wobei jede der Schutzkreise so ausgebildet ist, daß er ein Ausgangssignal liefert, das das Herunterfallen eines reaktivitätshemmenden Elementes anzeigt und zu diesem Zweck aufweist:
   - einen Neutronenflußdetektor (D1), der mit Abstand von der besagten Achse (A) angeordnet ist, um einen Neutronenfluß zu messen, der bei dem Herunterfallen eines reaktivitätshemmenden Elements eine Verminderung erfährt, die umso größer ist, je näher die Aussparung, in der sich das Herunterfallen des Elements ereignet, zum Detektor gelegen ist,
   - eine primäre Verarbeitungsschaltung (R1, S1), die mit diesem Detektor (D1) verbunden ist, um ein primäres, das Herunterfallen eines Elements signalisierendes Signal nur während der Zeit abgibt, in der der durch den Detektor gemessene Neutronenfluß eine Abschwächung erfährt, die eine Abnahmegeschwindigkeit aufweist, die eine vorbestimmte Geschwindigkeitsschwelle überschreitet,
   - wobei der Kreis einerseits mit dem Risiko behaftet ist, fälschlicherweise ein Signal am Ausgang des Kreises abzugeben, das ein Abfallen eines Elements anzeigt, obwohl ein solches Abfallen nicht stattgefunden hat, andererseits das Risiko beinhaltet, einen Fehler aufzuweisen, der das Liefern eines Primärsignals, das das Abfallen anzeigt, verhindert, während ein Abfallen des reaktivitätshemmenden Elements stattgefunden hat,
   - wobei die Detektoren winkelmäßig um die Achse herum verteilt angeordnet sind,
   - und das System ferner eine sekundäre Verarbeitungsschaltung (6) aufweist, die die Ausgangssignale, die das Abfallen eines Elements anzeigen, der Schutzkreise empfangen und ein Sekundärsignal nur dann abgeben, wenn es mindestens zwei dieser Ausgangssignale, die das Abfallen eines Elements anzeigen, der Kreise empfängt, derart, daß das Risiko, daß ein Sekundärsignal abgegeben wird, obwohl kein Abfallen eines reaktionshemmenden Elements stattgefunden hat, reduziert wird,
   - und Mittel zur Begrenzung der Kernreaktion, während das sekundäre Signal, das das Abfallen eines Elements anzeigt, geliefert wird,
   dadurch gekennzeichnet, daß jeder der Schutzkreise mindestens zwei Neutronenflußdetektoren (D1A, D1B), die winkelmäßig um mehr als 90 Grad um die besagte Achse (A) versetzt angeordnet sind,
   - zwei Primärverarbeitungsschaltungen (R1A, S1A und R1B, S1B), die jeweils mit den beiden Detektoren verbunden sind, um die Primärsignale, die das Abfallen eines Elements anzeigen, zu liefern,
   - und eine Zwischenverarbeitungsschaltung (P1) aufweist, die die Primärsignale empfängt und ein Zwischensignal liefert, während die Schaltung mindestens ein Primärsignal mindestens eines der zwei Primärverarbeitungsschaltungen empfängt,
   - wobei die Signale, die das Abfallen eines Elements anzeigen und die am Ausgang der Schutzkreise anliegen, aus den Zwischensignalen bestehen, derart, daß das Sekundärsignal im Falle eines Abfallens eines reaktionshemmenden Signals geliefert wird, selbst wenn die Abschwächungen des Neutronenflusses, die von mehreren der relativ weit entfernt von der Aussparung, die das reaktionshemmende Element aufnimmt, entfernt gelegenen Detektoren empfangen werden, nicht die vorbestimmte Änderungsgeschwindigkeitsschwelle überschreiten und, selbst wenn außerdem eine Panne bei einem der Kreise das Liefern eines Primärsignals, das das Abfallen eines Elements anzeigt, ausgehend von einem dieser Aussparung relativ nahegelegenen Detektor, verhindert.

2. System nach Anspruch 1, anwendbar bei einem Reaktor, dessen Kern (2) um die Achse (A) die gleiche Symmetrie aufweist wie ein Quadrat um seinen Mittelpunkt herum, wobei
   - die Anzahl der Schutzkreise (D1A, R1A, S1A, D1B, R1B, S1B, P1) vier beträgt,
   - und die Detektoren (D1A, D4B, D3A, D1B, D2A, D3B, D4A, D2B) winkelmäßig aufeinanderfolgend um die besagte Achse mit einer Beabstandung von nahezu 45 Grad angeordnet sind.

3. System nach Anspruch 2, dadurch gekennzeichnet, daß jeder dieser Schutzkreise (D1A, R1A, S1A, D1B, R1B, S1B, P1) zwei der Detektoren (D1A, D1B) aufweist, die winkelmäßig mit 135 Grad um die Achse (A) herum versetzt angeordnet sind.

4. System nach Anspruch 2, dadurch gekennzeichnet, daß der Schutzkreis (D1C, R1C, S1C, D1D, R1D, S1D, P1) zwei der Detektoren (D1C, D1D) aufweist, die winkelmäßig 180 Grad zueinander versetzt um die Achse (A) angeordnet sind.

# FIG. 1

# FIG. 2

# FIG. 3